# EUROPÄISCHE PATENTSCHRIFT

(11) **EP 0 914 407 B1**
(45) Veröffentlichungstag und Bekanntmachung des Hinweises auf die Patenterteilung: **05.01.2000**
(21) Anmeldenummer: 97933681.5
(22) Anmeldetag: 17.07.1997
(51) Int. Cl.: C10L 3/00

(54) **VERFAHREN ZUR INHIBIERUNG DER GASHYDRATBILDUNG**
METHOD OF INHIBITING GAS HYDRATE FORMATION
PROCEDE POUR INHIBER LA FORMATION D'HYDRATES DE GAZ

(30) Priorität: 23.07.1996 DE 19629662
(43) Veröffentlichungstag der Anmeldung: 12.05.1999
(73) Patentinhaber: Clariant GmbH, 65926 Frankfurt am Main (DE)
(72) Erfinder: KLUG, Peter, D-63762 Gro ostheim (DE)
(86) Internationale Anmeldenummer: EP9703831
(87) Internationale Veröffentlichungsnummer: WO9803615

(56) Entgegenhaltungen:
- EP-A- 0 323 775
- WO-A-96/04462
- WO-A-96/08636

## Beschreibung

Gashydrate sind kristalline Einschlußverbindungen von Gasmolekülen in Wasser, die sich unter bestimmten Temperatur- und Druckverhältnissen (niedrige Temperatur und hoher Druck) bilden. Hierbei bilden die Wassermoleküle Käfigstrukturen um die entsprechenden Gasmoleküle aus. Das allein aus Wassermolekülen gebildete Gittergerüst ist thermodynamisch instabil, erst durch die Einbindung von Gasmolekülen wird das Gitter stabilisiert und es entsteht eine eisähnliche Verbindung, die in Abhängigkeit von Druck und Gaszusammensetzung auch über den Gefrierpunkt von Wasser (bis über 25°C) hinaus existieren kann. Ein Überblick über das Thema Gashydrate ist in Sloan, Clathrate Hydrates of Natural Gases, M Dekker, New York, 1990 gegeben.

In der Erdöl- und Erdgasindustrie sind insbesondere die Gashydrate von großer Bedeutung, die sich aus Wasser und den Erdgasbestandteilen Methan, Ethan, Propan, Isobutan, n-Butan, Stickstoff, Kohlendioxid und Schwefelwasserstoff bilden. Insbesondere in der heutigen Erdgasförderung stellt die Existenz dieser Gashydrate ein großes Problem dar, besonders dann, wenn Naßgas oder Mehrphasengemische aus Wasser, Gas und Alkangemischen unter hohem Druck niedrigen Temperaturen ausgesetzt werden. Hier führt die Bildung der Gashydrate aufgrund ihrer Unlöslichkeit und kristallinen Struktur zur Blockierung von Fördereinrichtungen. Hierzu zählen Pipelines, Ventile oder Produktionseinrichtungen, in denen über längere Strecken bei niedrigen Temperaturen Naßgas oder Mehrphasengemische transportiert werden, wie dies speziell in kälteren Regionen der Erde oder auf dem Meeresboden vorkommt.

Außerdem kann die Gashydratbildung auch beim Bohren zur Erschließung neuer Gas- oder Erdöllagerstätten bei entsprechenden Druck- und Temperaturverhältnissen zu Problemen führen.

Um solche Probleme zu vermeiden, kann die Gashydratbildung in Gaspipelines oder beim Transport von Mehrphasengemischen durch Einsatz von größeren Mengen (zweistellige Prozentbeträge bezüglich der Wasserphase) niederer Alkohole, wie Methanol, Glykol, oder Diethylenglykol unterdrückt werden. Der Zusatz dieser Additive bewirkt, daß die thermodynamische Grenze der Gashydratbildung nach niedrigeren Temperaturen und höheren Drücken verlagert wird (thermodynamische Inhibierung). Durch den Zusatz dieser thermodynamischen Inhibitoren werden allerdings größere Sicherheitsprobleme (Flammpunkt und Toxizität der Alkohole), logistische Probleme (große Lagertanks, Recycling dieser Lösungsmittel) und dementsprechend hohe Kosten, speziell in der offshore-Förderung, verursacht.

Heute versucht man deshalb, thermodynamische Inhibitoren zu ersetzen, indem man in den Temperatur- und Druckbereichen, in denen sich Gashydrate bilden können, Additive (Einsatzmenge <2 %) zusetzt, die die Gashydratbildung entweder zeitlich hinauszögern (threshold hydrate inhibitors, kinetische Inhibierung) oder Gashydratagglomerate klein und pumpbar gestalten, so daß diese durch die Pipeline transportiert werden können (sog. Agglomerat-Inhibitoren oder Anti-Agglomerates).

Als Gashydratinhibitoren wurden in der Patentliteratur neben den bekannten thermodynamischen Inhibitoren eine Vielzahl monomerer als auch polymerer Substanzklassen beschrieben, die kinetische oder Agglomeratinhibitoren darstellen. Die Patentanmeldung WO 95/17579 beschreibt quartäre Ammoniumverbindungen, speziell solche, die Butyl- oder Pentylgruppen am quartären Zentrum tragen, als Gashydratinhibitoren. Mischungen solcher quartärer Ammoniumsalze mit Korrosionsinhibitoren und amidischen Polymeren werden in WO 96/04462 erwähnt. WO 96/08636 beschreibt oberflächenaktive Substanzen als Gashydratinhibitoren, die eine polare Kopfgruppe und einen hydrophoben Rest tragen, wobei im hydrophoben Rest nicht mehr als 12 Kohlenstoffatome enthalten sind. Als Beispiele werden Natriumvalerat, Butanol, Butylsulfat und Butylsulfonat, Alkylpyrrolidone sowie ein Zwitterion der Formel R₂N(CH₃)₂-(CH₂)₄SO₃⁻ genannt.

Viele von diesen Additiven sind allerdings bisher nicht wirksam genug oder nicht in ausreichender Menge oder nur zu hohen Preisen erhältlich oder sind toxikologisch nicht unbedenklich.

Aufgabe der vorliegenden Erfindung war es also, neue effektive Additive zu finden, die die Bildung von Gashydraten verlangsamen (kinetische Inhibitoren) oder die Gashydratkristalle klein und pumpbar halten (Anti-Agglomerates). Diese sollen die zur Zeit noch verwendeten thermodynamischen Inhibitoren (Methanol und Glykole), die beträchtliche Sicherheits- und Logistikprobleme verursachen, ersetzen und im Gegensatz zu den verwendeten quartären Ammoniumsalzen ein geringeres Gefährdungspotential für die Umwelt darstellen.

Wie nun überraschenderweise gefunden wurde, sind auch Aminoxide oder deren Salze als Gashydratinhibitoren besonders geeignet. Diese können, wie in den beigefügten Beispielen gezeigt, in niedriger Dosierung die Bildung von Gashydraten effektiv unterbinden. Außerdem besitzen die besonders wirksamen Aminoxide kaum tensidische Wirkung, was sich besonders in Bezug auf ihre Schaumwirkung günstig auswirkt, da gängige tensidische Additive oft zu schwerwiegenden Schaumproblemen führen.

Gegenstand der Erfindung ist somit ein Verfahren zur Inhibierung der Gashydratbildung, wobei man zu der Wasserphase bei Mehrphasengemischen (aus Gas, Wasser und gegebenenfalls Kondensat) ein Aminoxid oder dessen Salze zugibt.

Bevorzugt nimmt man für das erfindungsgemäße Verfahren Aminoxide der Formel

R¹,R²,R³N-O

worin R¹, R² und R³ unabhängig voneinander C₁-C₃₀-Alkyl, C₂-C₃₀-Alkenyl, C₇-C₃₀-Alkylaryl, C₇-C₃₀-Arylalkyl oder C₆-C₁₀-Aryl bedeuten, wobei die Alkyl- und Alkenylgruppen durch -O-, -NHCO- oder -O-CO- unterbrochen und durch Hydroxy-, Carbonyl-, Carbonamid- oder Alkoxycarboxylgruppen substituiert sein können und zwei oder drei Gruppen R¹, R² und R³ zusammen mit dem Stickstoffatom, an das sie gebunden sind, einen mono- oder bicyclischen Ring mit 4 bis 10 C-Atomen bilden können, wobei ein solcher monocyclischer Ring anstelle einer -CH₂-Einheit ein O-Atom enthalten kann.

Bevorzugt ist die Verwendung solcher Aminoxide der obigen Formel, worin R¹, R² und R³ unabhängig voneinander C₁-C₈-Alkyl oder C₂-C₈-Alkenyl bedeuten, die durch Sauerstoffatome unterbrochen und durch Hydroxy-, Carboxyl-, Carbonamid- oder Alkoxycarbonylgruppen substituiert sein können und zwei Gruppen R¹, R² und R³ einen Morpholinring bilden können.

Besonders bevorzugt ist die Verwendung von Aminoxiden der obigen Formel, worin R¹, R² und R³ unabhängig voneinander C₃-C₅-Alkyl oder C₂-C₅-Hydroxyalkyl bedeuten.

Diese Aminoxide können auch in Form ihrer Säureadditionssalze der Formel

R¹,R²,R³N^{⊕}-OHX^{⊖}

verwendet werden. X ist hierbei das Anion einer Mineral-, Carbon- oder Sulfonsäure. Beispiele für solche Anionen sind Halogenid, Sulfat, Phosphat, Nitrat sowie die Anionen von C₁-C₁₂-Alkansäuren, wie Formiat, Acetat, Propionat, Butyrat und Isobutyrat, n-Pentanoat, Methylbutyrat, Pivalat, Octanoat und Laurat.

Die Synthese der Aminoxide erfolgt nach an sich bekannten Verfahren, vorzugsweise durch Oxidation des entsprechenden tertiären Amins mit Peroxiden oder Persäuren, bevorzugt durch Oxidation mit Wasserstoffperoxid in wäßriger oder wäßrig/alkoholischer Lösung wie dies z.B. in J. Am. Chem. Soc. 1957, 79, 964 gezeigt ist. Es fällt unter diesen Bedingungen direkt eine niedrigviskose Lösung der gewünschten Aminoxide in Wasser oder Alkohol/Wasser-Gemischen an. Die Produkte können prinzipiell auch als wasserfreie Reinsubstanz eingesetzt werden, vorteilhafterweise setzt man sie aber im allgemeinen als wäßrige Lösung ein, um eine bequeme Dosierung bei niedriger Viskosität zu gewährleisten.

Die Aminoxide werden bei der Erdöl- und Erdgasförderung mittels gängiger Ausrüstung, wie Injektionspumpen o.ä. dem Mehrphasengemisch aus Gas und Wasser zugegeben, aufgrund der guten Wasserlöslichkeit der Aminoxide ist eine schnelle und gleichmäßige Verteilung des Inhibitors in der zur Hydratbildung neigenden Wasserphase gegeben. Im allgemeinen reicht die Zugabe der wäßrigen Aminoxidlösung aus, um eine gleichmäßige Verteilung zu erreichen.

Da der Inhibitor primär die Bildung von Gashydraten verzögert oder verhindert, muß die Zugabe des Inhibitors erfolgen, bevor Gashydratbildung auftritt, d.h. noch oberhalb der Gleichgewichtstemperatur der Hydratbildung. Dies ist i.a. gegeben, wenn man den Inhibitor direkt an der Erdgasquelle zusetzt.

Die Aminoxide können alleine oder in Kombination mit anderen bekannten Gashydratinhibitoren eingesetzt werden. Im allgemeinen wird man soviel der erfindungsgemäßen Gashydratinhibitoren einsetzen, daß man eine ausreichende Inhibierung erhält. Typische Einsatzkonzentrationen berechnet als 100 % Wirksubstanz sind 0,01 bis 2 Gew.-%, speziell Konzentrationen von 0,02 bis 1 Gew.-% (100-10 000 ppm), bezogen auf die Wasserphase.

Besonders geeignet sind auch Mischungen der Aminoxide oder Aminoxidsalze mit einem oder mehreren Polymeren mit einem durch Polymerisation erhaltenen Kohlenstoff-Backbone und Amidbindungen in den Seitenketten. Hierzu zählen besonders Polymere wie Polyvinylpyrrolidon, Polyvinylcaprolactam, Copolymere aus Vinylpyrrolidon und Vinylcaprolactam, sowie Terpolymere von Vinylpyrrolidon, Vinylcaprolactam und weiteren anionischen, kationischen und neutralen Comonomeren mit vinylischer Doppelbindung wie 1-Olefin, N-Alkylacrylamiden, N-Vinylacetamid, Acrylamid, Natrium-2-acrylamido-2-methyl-1-propansulfonat (AMPS) oder Acrylsäure. Weiterhin sind auch Mischungen mit Homo- und Copolymeren von N,N-Dialkylacrylamiden wie N-Acryloylpyrrolidon, N-Acryloylmorpholin und N-Acryloyl-piperidin geeignet. Ebenfalls sind Mischungen mit Alkylpolyglykosiden, Hydroxyethylcellulose, Carboxymethylcellulose sowie anderen ionischen oder nichtionischen Tensidmolekülen geeignet.

Die Wirksamkeit der erfindungsgemäßen Aminoxide wurde anhand des auch in WO 95/17579 und WO 96/08636 beschriebenen THF-Hydrat-Tests untersucht. Da natürliche Gashydrate nur bei hohen Drücken existieren, die nur schwer unter Laborbedingungen zugänglich sind, benutzt man als Modell die Bildung von Clathraten aus THF (Tetrahydrofuran) und Wasser. Diese Hydrate bilden sich bei Normaldruck bei 4°C bei einem molaren Wasser:THF-Verhältnis von 17:1. Zeigt ein Additiv nun die Eigenschaft, die Bildung von THF-Hydraten kinetisch zu inhibieren oder die gebildeten THF-Hydrate rührbar zu halten, dann sollte dieses Additiv ähnlich auf natürlich vorkommende Gashydrate wirken. Wie in den unten angeführten Versuchsbeispielen gezeigt werden kann, setzt die THF-Hydratbildung ohne Inhibitor (Beispiel 1) unter den Versuchsbedingungen schnell ein und führt zur Bildung von THF-Hydraten in nadeliger oder blättchenartiger Form, die die gesamte Testlösung sehr schnell zum Erstarren bringen. Durch Zugabe eines Aminoxids oder Aminoxidsalzes (Beispiele 2-13) wird die THF-Hydratbildung bedeutend verlangsamt und/oder die Kristallform der entstehenden Hydrate verändert.

Alle eingesetzten Aminoxide und Aminoxidsalze verlangsamen die THF-Hydratbildung. Besonders gute Effekte zeigen die hydrophoberen Aminoxide wie Tripropylaminoxid, Tributylaminoxid und Tripentylaminoxid.

Der THF-Test wurde folgendermaßen durchgeführt:

### Beispiel 1 (Versuch ohne Inhibitor):

Eine kurze Pasteurpipette (l=140 mm) wird in einem durchbohrten Korkstopfen so befestigt, daß die Pipettenspitze 120 mm aus dem Korkstopfen herausragt. Dann wird in diese Pipette ein Tropfen einer THF-Wasser-Mischung (1:17) mittels Kapillarwirkung aufgenommen, die Pipette (mit Korkstopfen) tariert und mindestens 2 h bei -20°C gekühlt. Eine 3,5 %ige Kochsalzlösung wird mit THF im Verhältnis 4:1 gemischt. 30 ml dieser Lösung werden in ein Reagenzglas (150 x 30 mm) gegeben und 25 min in einem Kühlbad bei 0°C temperiert (Eintauchtiefe des Reagenzglases im Kühlbad ca. 60 mm).

Die gefrorene Pipette wird aus dem Kühlschrank entnommen, schnell abgewischt (um Kristallkeime auf der Außenseite der Pipette zu entfernen und so einheitliche Startbedingungen zu erhalten) und sofort ca. 15 mm in die obige THF-Wasser-Kochsalzmischung eingetaucht, wobei sich nach kurzer Zeit (wenige Minuten) THF-Hydrate bilden.
Die Pipette wird nach 5 - 15 min sehr vorsichtig aus dem Reagenzglas herausgenommen und die Pipette mit Korkstopfen und anhaftenden Hydraten sofort tariert. Aus der Differenz zwischen Ein- und Auswaage und der abgelaufenen Zeit wird die Wachstumsgeschwindigkeit der THF-Hydratbildung (in g/h) berechnet.

### Beispiele 2 - 13:

Es wird wie unter Beispiel 1 vorgegangen, jedoch werden der Testlösung 5000 ppm des entsprechenden Inhibitors zugesetzt. Die Kristallwachstumszeit wird von 5 min auf ggf. 1 h erhöht, wenn kein schnelles Hydratwachstum zu erkennen ist. Die Auswertung erfolgt wie oben. Die Kristallform der gebildeten Hydrate wird notiert.

Die Ergebnisse sind in Tabelle 1 zusammengefaßt und zeigen die Wirksamkeit der Aminoxide.

**Tabelle 1:**

| THF-Test, Hydratwachstumsgeschwindigkeiten | | | |
|---|---|---|---|
| Bsp. | Inhibitor | Wachstumsgeschwindigkeit (g/h) | Aussehen der Hydratkristalle |
| 1 | ohne | 4,05 | Nadeln + Blättchen |
| 2 | Trimethylaminoxid | 1,37 | Blättchen |
| 3 | Tri-n-propyl-aminoxid | 0,55 | Blättchen |
| 4 | Triisopropanolamin-N-oxid | 1,13 | Blättchen |
| 5 | Di-n-butylhydroxyethyl-aminoxid | 0,62 | Nadeln + Blättchen |
| 6 | Tri-n-butyl-aminoxid | <0,01 | kein Hydratwachstum |
| 7 | Tri-n-pentyl-aminoxid | <0,01 | kein Hydratwachstum |
| 8 | Di-n-octyl-methyl-aminoxid | 0,99 | Nadeln + Blättchen |
| 9 | Cocoyl-dimethyl-aminoxid | 1,24 | Nadeln + Blättchen |
| 10 | Bis-hydroxyethyl-cocoyl-aminoxid | 0,97 | Nadeln + Blättchen |
| 11 | Cocosfettsäure-dimethyl-3-aminopropyl-amid-N-oxid | 1,07 | Blättchen |
| 12 | N-Methylmorpholin-N-oxid | 0,95 | Blättchen |
| 13 | Tri-n-butylaminoxid-propionat | 0,06 | Nadeln |

Die Herstellung dieser Aminoxide erfolgte nach der folgenden allgemeinen Vorschrift:
0,50 mol des entsprechenden tert. Amins wurden in 150 ml Isopropanol gelöst und 1,50 mol 35 % wäßriges Wasserstoffperoxid innerhalb 30 min zugetropft. Das Reaktionsgemisch ist im Falle wasserunlöslicher Amine (Tributylamin, Tripentylamin) nun zweiphasig. Anschließend wurde ca. 2 - 30 h (je nach Wasserlöslichkeit des Amins) bei 25°C stark gerührt, wobei sich eine einphasige, klare Lösung des Aminoxids in Wasser bildete, die nach beendeter Reaktion mit Phenolphthalein keine Violettfärbung mehr ergab. Abschließend wurde zur Zerstörung des Wasserstoffperoxid-Überschusses 2 h auf 60 - 80°C erhitzt. Man erhielt eine wäßrig-isopropanolische Lösung des entsprechenden Aminoxids.

## Patentansprüche

1. Verfahren zur Inhibierung der Gashydratbildung, dadurch gekennzeichnet, daß man zu der Wasserphase bei Mehrphasengemischen in der Erdöl- oder Erdgasförderung ein Aminoxid oder dessen Salze zugibt.

2. Verfahren nach Anspruch 1, dadurch gekennzeichnet, daß man ein Aminoxid der Formel
R¹,R²,R³N-O
zugibt, worin R¹, R² und R³ unabhängig voneinander C₁-C₃₀-Alkyl, C₂-C₃₀-Alkenyl, C₇-C₃₀-Alkylaryl, C₇-C₃₀-Arylalkyl oder C₆-C₁₀-Aryl bedeuten, wobei die Alkyl- und Alkenylgruppen durch -O-, -NHCO- oder -O-CO- unterbrochen und durch Hydroxy-, Carbonyl-, Carbonamid- oder Alkoxycarboxylgruppen substituiert sein können und zwei oder drei Gruppen R¹, R² und R³ zusammen mit dem Stickstoffatom, an das sie gebunden sind, einen mono- oder bicyclischen Ring mit 4 bis 10 C-Atomen bilden können, wobei ein solcher monocyclischer Ring anstelle einer -CH₂-Einheit ein O-Atom enthalten kann.

3. Verfahren nach Anspruch 1, dadurch gekennzeichnet, daß man ein Aminoxid der Formel
R¹,R²,R³N-O
zugibt, worin R¹, R² und R³ unabhängig voneinander C₁-C₈-Alkyl oder C₂-C₈-Alkenyl bedeuten, die durch Sauerstoffatome unterbrochen und durch Hydroxy-, Carboxyl-, Carbonamid- oder Alkoxycarbonylgruppen substituiert sein können und zwei Gruppen R¹, R² und R³ einen Morpholinring bilden können.

4. Verfahren nach Anspruch 1, dadurch gekennzeichnet, daß man ein Aminoxid der Formel
R¹,R²,R³N-O
zugibt, worin R¹, R² und R³ unabhängig voneinander C₃-C₅-Alkyl oder C₂-C₅-Hydroxyalkyl bedeuten.

5. Verfahren nach Anspruch 1, dadurch gekennzeichnet, daß man die Aminoxide in einer Menge von 0,02 bis 1 Gew.-% zugibt.

## Claims

1. A method for inhibiting gas hydrate formation, which comprises the addition to the aqueous phase, in the case of multiphase mixtures in petroleum or natural gas production, of an amine oxide or salts thereof.

2. The method as claimed in claim 1, wherein an amine oxide of the formula
R¹,R²,R³N-O
is added, wherein R¹, R² and R³, independently of one another, are C₁-C₃₀-alkyl, C₂-C₃₀-alkenyl, C₇-C₃₀-alkylaryl, C₇-C₃₀-arylalkyl or C₆-C₁₀-aryl, where the alkyl and alkenyl groups may be interrupted by -O-, -NHCO- or -O-CO- and may be substituted by hydroxyl groups, carbonyl groups, carbonamide groups or alkoxycarboxyl groups and two or three groups R¹, R² and R³, together with the nitrogen atom to which they are bound, may form a mono- or bicyclic ring having from 4 to 10 carbon atoms, where one such monocyclic ring may contain an oxygen atom instead of a -CH₂- unit.

3. The method as claimed in claim 1, wherein an amine oxide of the formula
R¹,R²,R³N-O
is added, wherein R¹, R² and R³, independently of one another, are C₁-C₈-alkyl or C₂-C₈-alkenyl which may be interrupted by oxygen atoms and may be substituted by hydroxyl groups, carboxyl groups, carbonamide groups or alkoxycarbonyl groups and two groups R¹, R² and R³ may form a morpholine ring.

4. The method as claimed in claim 1, wherein an amine oxide of the formula
R¹,R²,R³N-O
is added, wherein R¹, R² and R³, independently of one another, are C₃-C₅-alkyl or C₂-C₅-hydroxyalkyl.

5. The method as claimed in claim 1, wherein the amine oxides are added in an amount of from 0.02 to 1 wt%.

## Revendications

1. Procédé pour inhiber la formation d'hydrates de gaz, caractérisé en ce que, dans le cas de mélanges de plusieurs phases dans l'extraction du pétrole ou du gaz naturel, on ajoute un amino-oxyde ou ses sels à la phase aqueuse.

2. Procédé selon la revendication 1, caractérisé en ce que l'on ajoute un amino-oxyde de formule
R¹,R²,R³N-O
dans laquelle R¹, R² et R³ représentent, indépendamment l'un de l'autre, alkyle en C₁-C₃₀, alcényle en C₂-C₃₀, alkylaryle en C₇-C₃₀, arylalkyle en C₇-C₃₀ ou aryle en C₆-C₁₀, dans lesquels les groupes alkyle et alcényle peuvent être interrompus par -O-, -NHCO- ou -O-CO- et substitués par des groupes hydroxy, carbonyle, carboxamide ou alcoxycarboxyle et deux ou trois groupes R¹, R² et R³ peuvent former, ensemble avec l'atome d'azote auquel ils sont liés, un cycle mono- ou bicyclique avec 4 à 10 atomes de C, un tel cycle monocyclique pouvant contenir, au lieu d'une unité -CH₂-, un atome de O.

3. Procédé selon la revendication 1, caractérisé en ce que l'on ajoute un amino-oxyde de formule
R¹,R²,R³N-O
dans laquelle R¹, R², R³, indépendamment l'un de l'autre, représentent alkyle en C₁-C₈ ou alcényle en C₂-C₈ qui peuvent être interrompus par des atomes d'oxygène et substitués par des groupes hydroxy, carboxyle, carboxamide ou alcoxycarbonyle et deux groupes R¹, R² et R³ peuvent former un cycle morpholine.

4. Procédé selon la revendication 1, caractérisé en ce que l'on ajoute un amino-oxyde de formule
R¹,R²,R³N-O
dans laquelle R¹, R² et R³, indépendamment l'un de l'autre, représentent alkyle en C₃-C₅ ou hydroxyalkyle en C₂-C₅.

5. Procédé selon la revendication 1, caractérisé en ce que l'on ajoute les amino-oxydes en une quantité de 0,02 à 1 % en poids.
